(19)

Europäisches Patentamt

European Patent Office

Office européen des brevets

(11) **EP 4 624 239 A1**

(12) **EUROPEAN PATENT APPLICATION**
published in accordance with Art. 153(4) EPC

(43) Date of publication:
01.10.2025 Bulletin 2025/40

(21) Application number: 23896431.6

(22) Date of filing: 01.11.2023

(51) International Patent Classification (IPC):
B60L 58/22 (2019.01)        B60L 53/24 (2019.01)
H01M 10/615 (2014.01)       H01M 10/44 (2006.01)

(52) Cooperative Patent Classification (CPC):
B60L 53/24; B60L 58/22; B60L 58/25; H01M 10/44;
H01M 10/615

(86) International application number:
PCT/CN2023/129001

(87) International publication number:
WO 2024/114277 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 CN 202211527259

(71) Applicant: BYD Company Limited
Shenzhen, Guangdong 518118 (CN)

(72) Inventors:
• LING, Heping
Shenzhen, Guangdong 518118 (CN)

• LI, Jicheng
Shenzhen, Guangdong 518118 (CN)
• ZHANG, Dajian
Shenzhen, Guangdong 518118 (CN)
• ZHANG, Jie
Shenzhen, Guangdong 518118 (CN)
• QIN, Gai
Shenzhen, Guangdong 518118 (CN)

(74) Representative: Taor, Simon Edward William et al
Venner Shipley LLP
200 Aldersgate
London EC1A 4HD (GB)

(54) **BATTERY DYNAMIC EQUALIZATION APPARATUS, CONTROL METHOD THEREOF AND VEHICLE**

(57)    A battery dynamic equalization apparatus, a control method thereof and a vehicle. The apparatus comprises: a power battery (110); a motor controller (120); a direct-current charging and discharging port (130); and a controller (140), the controller being connected to the motor controller. The controller is configured to: in a first preset state, charge the power battery by means of the direct-current charging and discharging port, and control bridge arms of the motor controller to alternately charge and discharge a first battery pack (EI) and a second battery pack (E2) so as to achieve self-heating of the first battery pack and the second battery pack, and allow the absolute value of the difference between the battery level of the first battery pack and the battery level of the second battery pack to be lower than a preset threshold. The battery dynamic equalization apparatus, when charging the power battery, can realize dynamic equalization of battery levels of the first battery pack and the second battery pack in the self-heating process, thereby improving the battery performance and extending the battery life.

FIG. 1

EP 4 624 239 A1

**Description**

## CROSS-REFERENCE TO RELATED APPLICATIONS

The present disclosure claims priority to Chinese Patent Application No. 202211527259.2, filed on November 30, 2022. The entire content of the above-referenced application is incorporated herein by reference.

## FIELD

The present disclosure relates to the field of battery protection technologies, and in particular, to a battery dynamic equalization apparatus, a control method for a battery dynamic equalization apparatus, and a vehicle.

## BACKGROUND

With development and rapid popularization of electric vehicles, a charging technology for power batteries of the electric vehicles has become increasingly important. The charging technology needs to meet requirements of different users and be adaptable and compatible with different power batteries and different charging piles. A battery pack usually includes multiple battery units connected in series. Due to differences between battery units in aspects such as a charging state, impedance, and temperature characteristics, non-equalization between the battery units may be caused. The non-equalization reduces a capacity and life of the entire battery pack. For a battery pack including multiple cells, a state of each cell may vary due to differences in battery aging and battery temperature. Currently, when a vehicle is being charged, a voltage difference between batteries may gradually increase. This may lead to non-equalization between the batteries and may shorten the battery life.

## SUMMARY

The present disclosure is intended to solve one of the technical problems in the related art at least to some extent. Therefore, a first objective of the present disclosure is to provide a battery dynamic equalization apparatus, to implement dynamic equalization of electric quantity between a first battery pack and a second battery pack during self-heating when a power battery is being charged, thereby improving performance of the batteries and prolonging battery life.
A second objective of the present disclosure is to provide a control method for a battery dynamic equalization apparatus.
A third objective of the present disclosure is to provide a vehicle.
To achieve the foregoing objectives, an embodiment of the first aspect of the present disclosure provides a battery dynamic equalization apparatus, including: a power battery, where the power battery includes a first battery pack and a second battery pack that are connected in series, and a first node is provided between the first battery pack and the second battery pack; a motor controller, where a first end of the motor controller is connected to a positive electrode of the first battery pack, and a second end of the motor controller is connected to a negative electrode of the second battery pack; a DC charging and discharging port, where a positive electrode of the DC charging and discharging port is connected to a first bus terminal of the motor controller, and a negative electrode of the DC charging and discharging port is connected to a second bus terminal of the motor controller; and a controller, where the controller is connected to the motor controller, and the controller is configured to charge, in a first preset state, the power battery through the DC charging and discharging port, and control a bridge arm of the motor controller to alternately charge and discharge the first battery pack and the second battery pack to implement self-heating of the first battery pack and the second battery pack, and cause an absolute value of a difference between a capacitance of the first battery pack and a capacitance of the second battery pack to be lower than a preset threshold.
In the battery dynamic equalization apparatus according to the embodiment of the present disclosure, the power battery includes the first battery pack and the second battery pack that are connected in series, and the first node is provided between the first battery pack and the second battery pack. The first end of the motor controller is connected to the positive electrode of the first battery pack, and the second end of the motor controller is connected to the negative electrode of the second battery pack. The positive electrode of the DC charging and discharging port is connected to the first bus terminal of the motor controller, and the negative electrode of the DC charging and discharging port is connected to the second bus terminal of the motor controller. The controller is connected to the motor controller. The controller is configured to charge, in the first preset state, the power battery through the DC charging and discharging port, and control the bridge arm of the motor controller to alternately charge and discharge the first battery pack and the second battery pack to implement self-heating of the first battery pack and the second battery pack, and cause the absolute value of the difference between the capacitance of the first battery pack and the capacitance of the second battery pack to be lower than the preset threshold. Therefore, the equalization apparatus can implement dynamic equalization of electric quantity between the first battery pack and the second battery pack during self-heating when the power battery is being charged, thereby improving performance of batteries and prolonging battery life.

In addition, the battery dynamic equalization apparatus according to the foregoing embodiment of the present disclosure may further have the following additional technical features.

According to an embodiment of the present disclosure, the battery dynamic equalization apparatus further includes a motor. The motor controller includes at least two phases of first bridge arms. A first end of each phase of first bridge arm is connected to the positive electrode of the first battery pack, and a second end of each phase of first bridge arm is connected to the negative electrode of the second battery pack. The motor includes at least two phases of first inductors. A first end of each phase of first inductor is connected to a corresponding first bridge arm, and a second end of each phase of first inductor is connected to the first node. A neutral wire is led out from the motor, and the neutral wire is connected to the first node.

According to an embodiment of the present disclosure, the battery dynamic equalization apparatus further includes: a DC charging and discharging port. A positive electrode of the DC charging and discharging port is connected to the neutral wire, and a negative electrode of the DC charging and discharging port is connected to the second bus terminal of the motor controller. The controller is configured to control the bridge arm of the motor controller in a second preset state, to boost and charge the power battery.

According to an embodiment of the present disclosure, the controller is configured to collect a battery equalization parameter and a temperature requirement parameter of the power battery; and obtain a target equalizing current based on the battery equalization parameter, obtain a target self-heating current based on the temperature requirement parameter, and adjust, based on the target equalizing current, the target self-heating current, and an actual phase current of the motor, a first control signal for controlling the motor controller, to self-heat and equalize the first battery pack and the second battery pack.

According to an embodiment of the present disclosure, the controller is configured to perform integral calculation on the battery equalization parameter to obtain the target equalizing current, where the battery equalization parameter includes: one of a discharge capacity difference, a voltage difference, and an instantaneous power difference, where the discharge capacity difference, the voltage difference, and the instantaneous power difference denote a discharge capacity difference, a voltage difference, and an instantaneous power difference between the first battery pack and the second battery pack, respectively.

According to an embodiment of the present disclosure, the battery equalization parameter is the discharge capacity difference; and the controller is configured to collect each phase current of the motor; calculate a neutral wire current of the motor based on each phase current of the motor; and integrate the neutral wire current to obtain the discharge capacity difference.

According to an embodiment of the present disclosure, the battery equalization parameter is the discharge capacity difference; and the controller is configured to collect a bus positive current and a bus negative current of the power battery; perform ampere-hour integration on the bus positive current of the power battery, to obtain a discharge capacity of the first battery pack, and perform ampere-time integration on the bus negative current of the power battery, to obtain a discharge capacity of the second battery pack; and obtain the discharge capacity difference based on the discharge capacity of the first battery pack and the discharge capacity of the second battery pack.

According to an embodiment of the present disclosure, the battery equalization parameter is the discharge capacity difference; and the controller is configured to collect a bus positive current of the motor controller and a bus negative current of the motor controller; perform ampere-hour integration on the bus positive current, to obtain the discharge capacity of the first battery pack, and perform ampere-time integration on the bus negative current, to obtain the discharge capacity of the second battery pack; and obtain the discharge capacity difference based on the discharge capacity of the first battery pack and the discharge capacity of the second battery pack.

According to an embodiment of the present disclosure, an equalizing current parameter is the voltage difference; and the controller is configured to collect a bus voltage of the motor controller and a voltage of the second battery pack; calculate a voltage of the first battery pack based on the bus voltage and the voltage of the second battery pack; and determine the voltage difference based on the voltage of the first battery pack and the voltage of the second battery pack.

According to an embodiment of the present disclosure, the equalizing current parameter is the instantaneous power difference; and the controller is configured to collect the bus positive current and the bus negative current of the power battery, the voltage of the first battery pack, and the voltage of the second battery pack; determine instantaneous power of the first battery pack based on the bus positive current and the voltage of the first battery pack, and determine instantaneous power of the second battery pack based on the bus negative current and the voltage of the second battery pack; and determine the instantaneous power difference based on the instantaneous power of the first battery pack and the instantaneous power of the second battery pack.

According to an embodiment of the present disclosure, the controller is configured to obtain required heating power based on the temperature requirement parameter; determine an amplitude and a frequency of a self-heating current of the neutral wire based on the required heating power; and determine the target self-heating current based on the amplitude and the frequency.

According to an embodiment of the present disclosure, the controller is further configured to obtain the target heating equalizing current by the following formula:

$$In^* = indc + ipk \cdot \sin(2 \cdot \pi \cdot f \cdot t)$$

where $In^*$ denotes the target heating equalizing current, $indc$ denotes the target equalizing current, $ipk$ denotes an amplitude of the target self-heating current, $f$ denotes a frequency of the target self-heating current, and $t$ denotes a time.

According to an embodiment of the present disclosure, the controller is further configured to obtain an actual phase current of the motor; obtain a common mode voltage based on the target heating equalizing current and the actual phase current; and adjust the first control signal for the motor controller based on the common mode voltage.

According to an embodiment of the present disclosure, the controller is configured to control, when it is detected that the absolute value of the difference between the capacitance of the first battery pack and the capacitance of the second battery pack is not lower than the preset threshold in a third preset state, the bridge arm of the motor controller to equalize the first battery pack and the second battery pack.

To achieve the foregoing objectives, an embodiment of the second aspect of the present disclosure provides a control method for a battery dynamic equalization apparatus. The apparatus includes: a power battery, a motor controller, a DC charging and discharging port, and a controller, where the power battery includes a first battery pack and a second battery pack that are connected in series, and a first node is provided between the first battery pack and the second battery pack. A first end of the motor controller is connected to a positive electrode of the first battery pack, and a second end of the motor controller is connected to a negative electrode of the second battery pack. A positive electrode of the DC charging and discharging port is connected to a first bus terminal of the motor controller, and a negative electrode of the DC charging and discharging port is connected to a second bus terminal of the motor controller. The controller is connected to the motor controller. The method is applied to the controller and includes: in a first preset state, the power battery is charged through the DC charging and discharging port, and a bridge arm of the motor controller is controlled to alternately charge and discharge the first battery pack and the second battery pack to implement self-heating of the first battery pack and the second battery pack, and cause an absolute value of a difference between a capacitance of the first battery pack and a capacitance of the second battery pack to be lower than a preset threshold.

In the control method for a battery dynamic equalization apparatus according to the embodiment of the present disclosure, the apparatus includes: the power battery, the motor controller, the DC charging and discharging port, and the controller, where the power battery includes the first battery pack and the second battery pack that are connected in series, and the first node is provided between the first battery pack and the second battery pack. The first end of the motor controller is connected to the positive electrode of the first battery pack, and the second end of the motor controller is connected to the negative electrode of the second battery pack. The positive electrode of the DC charging and discharging port is connected to the first bus terminal of the motor controller, and the negative electrode of the DC charging and discharging port is connected to the second bus terminal of the motor controller. The controller is connected to the motor controller. The method is applied to the controller and includes: in the first preset state, the power battery is charged through the DC charging and discharging port, and the bridge arm of the motor controller is controlled to alternately charge and discharge the first battery pack and the second battery pack to implement self-heating of the first battery pack and the second battery pack, and cause the absolute value of the difference between the capacitance of the first battery pack and the capacitance of the second battery pack to be lower than the preset threshold. Therefore, the method can implement dynamic equalization of electric quantity between the first battery pack and the second battery pack during self-heating when the power battery is being charged, thereby improving performance of batteries and prolonging battery life.

To achieve the foregoing objectives, an embodiment of the third aspect of the present disclosure provides a vehicle, including the above battery dynamic equalization apparatus.

In the vehicle according to the embodiment of the present disclosure, through the above battery dynamic equalization apparatus, dynamic equalization of electric quantity between a first battery pack and a second battery pack during self-heating when a power battery is being charged can be implemented, thereby improving performance of batteries and prolonging battery life.

Some of additional aspects and advantages of the present disclosure are set forth in the following description, and some become apparent from the following description, or are learned by practice of the present disclosure.

## BRIEF DESCRIPTION OF THE DRAWINGS

FIG. 1 is a schematic block diagram of a battery dynamic equalization apparatus according to an embodiment of the present disclosure;

FIG. 2 is a schematic circuit diagram of a battery dynamic equalization apparatus according to an embodiment of the present disclosure;

FIG. 3 is a flowchart of a control method for a battery dynamic equalization apparatus according to an embodiment of the present disclosure;

FIG. 4 is a flowchart of a control method for a battery dynamic equalization apparatus according to a specific example of the present disclosure; and

FIG. 5 is a schematic block diagram of a vehicle according to an embodiment of the present disclosure.

## DETAILED DESCRIPTION

Embodiments of the present disclosure are described in detail below, and examples of the embodiments are shown in accompanying drawings. The same or similar elements or the elements having same or similar functions are denoted by the same or similar reference signs throughout the description. The embodiments described below with reference to the accompanying drawings are exemplary, and are intended to explain the present disclosure and cannot be construed as a limitation to the present disclosure.

During self-heating operation of a vehicle battery, each battery pack is constantly charging and discharging, and there is a high frequency of charging and discharging. In fact, there are differences in state, impedance, temperature characteristics, and the like of each battery unit. Once a voltage difference between battery packs occurs, if no equalization regulation is performed, non-equalization between the battery packs is accelerated. As a self-heating time increases, the voltage difference between battery packs also gradually increases, battery capacities become increasingly equalized (for example, there are two battery packs E1 and E2, one of the battery packs is fully charged, and the other is fed), and a mile range sharply decreases. This may shorten battery life in a long time. Therefore, to solve non-equalization of voltage between battery packs during self-heating of batteries, the present disclosure provides a battery dynamic equalization apparatus. When batteries are being charged, before a self-heating function of the batteries is enabled, whether an initial electric quantity of each battery pack is equalized and non-equalization between the battery packs during self-heating operation of the batteries are determined, so that dynamic equalization of electric quantity between the battery packs can be implemented when the battery packs are non-equalized in electric quantity. This improves performance of the batteries and prolongs battery life.

A battery dynamic equalization apparatus, a control method for a battery dynamic equalization apparatus, and a vehicle according to embodiments of the present disclosure are described below with reference to the accompanying drawings.

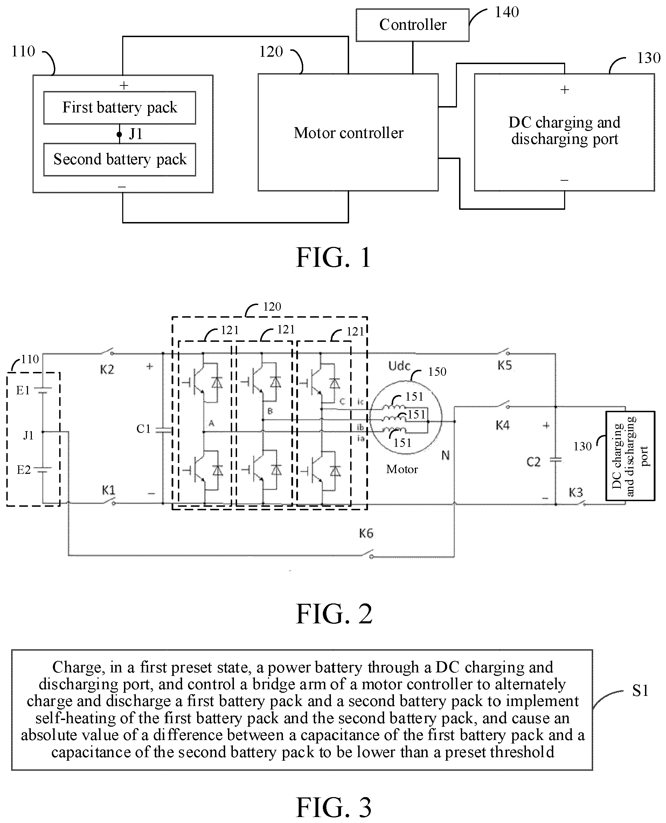

FIG. 1 is a schematic block diagram of a battery dynamic equalization apparatus according to an embodiment of the present disclosure.

As shown in FIG. 1, the battery dynamic equalization apparatus may include: a power battery 110, a motor controller 120, a DC charging and discharging port 130, and a controller 140.

The power battery 110 includes a first battery pack E1 and a second battery pack E2 that are connected in series, and a first node J1 is provided between the first battery pack E1 and the second battery pack E2. A first end of the motor controller 120 is connected to a positive electrode of the first battery pack E1, and a second end of the motor controller 120 is connected to a negative electrode of the second battery pack E2. A positive electrode of the DC charging and discharging port 130 is connected to a first bus terminal of the motor controller 120, and a negative electrode of the DC charging and discharging port 130 is connected to a second bus terminal of the motor controller 120. The controller 140 is connected to the motor controller 120, and the controller 140 is configured to charge, in a first preset state, the power battery 110 through the DC charging and discharging port 130, and control a bridge arm of the motor controller 120 to alternately charge and discharge the first battery pack E1 and the second battery pack E2 to implement self-heating of the first battery pack E1 and the second battery pack E2, and cause an absolute value of a difference between a capacitance of the first battery pack E1 and a capacitance of the second battery pack to be lower than a preset threshold. The first preset state is a state of self-heating and equalization of the power battery when the power battery is being charged. The preset threshold may be determined based on an actual case.

Further, as shown in FIG. 2, according to an embodiment of the present disclosure, the battery dynamic equalization apparatus further includes a motor 150. The motor controller 120 includes at least two phases of first bridge arms 121. A first end of each phase of first bridge arm 121 is connected to the positive electrode of the first battery pack E1, and a second end of each phase of first bridge arm 121 is connected to the negative electrode of the second battery pack E2. The motor 150 includes at least two phases of first inductors 151. A first end of each phase of first inductor 151 is connected to a corresponding first bridge arm 121, and a second end of each phase of first inductor 151 is connected to the first node J1. A neutral wire is led out from the motor 150, and the neutral wire is connected to the first node J1.

Specifically, the motor 150 may include a permanent magnet synchronous motor, an asynchronous motor, or another type of motor. The motor 150 may be three-phase, five-phase, six-phase, nine-phase, or the like. The motor 150 may include a form of multiple windings. A motor coil includes x windings, where x is greater than or equal to 1 and x is an integer. Each winding includes at least two phases of windings, and each phase of winding corresponds to a group of bridge arms for control. A winding shown in FIG. 2 and a motor being a three-phase motor are taken as an example for illustration. Two battery packs (a first battery pack E1 and a second battery pack E2) of the power battery 110 are first connected in series, and each battery pack is formed by connecting multiple battery units (or cells) in series. The two battery packs include the same battery units. The battery units of the entire power battery 110 are even-numbered. A positive bus, a negative bus, and a battery pack series-connection midpoint lead-out wire are led out from the power battery 110. The positive bus and the negative bus of the power battery 110 are connected to a positive bus and a negative bus of the motor controller 120 by switches K2 and K1 respectively. The motor controller 120 includes at least one phase of first bridge arm 121. For example, in FIG. 2, A, B, and C are first bridge arms 121, which are connected to a three-phase coil (first inductor 151) of the motor 150, and a lead-out neutral wire (neutral wire) of the motor 150 is connected to a switch K6. The switch K6 is connected to a series-connection midpoint J1 lead-out wire of the power battery 110, and a bus capacitor C1 is connected in parallel to positive and negative buses of the motor controller 120. The positive electrode of the DC charging and discharging port 130 is connected to the first bus terminal of the motor controller 120. A series connection switch K5 of a DC charging and discharging port is connected to a bus positive electrode of the motor controller 120, and a positive series connection switch K4 of the DC charging and discharging port 130 is connected to the lead-out neutral wire of the motor 150. The negative electrode of the DC charging and discharging port 130 is connected to the second bus terminal of the motor controller 120. A series connection switch K3 of the DC charging and discharging port is connected to a bus negative electrode of the motor controller 120. A positive electrode of a capacitor C2 is connected to a positive electrode of the DC charging and discharging port 130, and a negative electrode of the capacitor C2 is connected to the bus negative electrode of the motor controller 120. In a shutdown state, that is, when the vehicle is neither charged nor driving, and a system is powered off, the switches K1, K2, K3, K4, K5, and K6 are all open. When the vehicle is in the first preset state, that is, the vehicle is under a charging condition, the switches K1, K2, K3, K4, and K5 are controlled to be closed, and the power battery 110 is charged through the DC charging and discharging port 130. When a self-heating requirement signal is received, the switch K6 is controlled to be closed, and the power battery 110 may perform self-heating. During self-heating, each battery pack is constantly charged and discharged, and the controller 140 (not shown in the figure) may adjust and control a duty cycle of each phase of bridge arm of the motor controller 120, to equalize the first battery pack E1 and the second battery pack E2. For example, when the vehicle is under a charging condition and the power battery 110 is self-heating, and when the first battery pack E1 has a high capacitance while the second battery pack E2 has a low capacitance, the duty cycle for connection of an upper bridge arm can be controlled to be higher, so that electricity of the first battery pack E1 may be transferred to the first inductor 151 in the motor 150 for storage, and is discharged to the second battery pack E2 through the lead-out neutral wire of the motor 150. That is, by alternate charging and discharging of the first battery pack E1 and the second battery pack E2, self-heating of the first battery pack E1 and the second battery pack E2 is implemented. The absolute value of the difference between the capacitance of the first battery pack E1 and the capacitance of the second battery pack E2 is reduced to be lower than the preset threshold, so that dynamic equalization of electric quantity between the first battery pack and the second battery pack during self-heating of batteries when the power battery is being charged can be implemented, thereby improving performance of the batteries and prolonging battery life. The duty cycle refers to a duty cycle for connection of the upper bridge arm, and duty cycles of the upper bridge arm and a lower bridge arm are complementary. For example, if the upper bridge arm is connected for 70% of total duration, the lower bridge arm is connected for 30% thereof, so that a battery pack having a high capacitance is more discharged, while a battery pack having a low capacitance is less discharged, and a certain dead time may be retained based on characteristics of a power device.

The battery dynamic equalization apparatus according to the present disclosure is described in detail below.

According to an embodiment of the present disclosure, as shown in FIG. 2, the battery dynamic equalization apparatus further includes: a DC charging and discharging port 130. A positive electrode of the DC charging and discharging port 130 is connected to the neutral wire, and a negative electrode of the DC charging and discharging port 130 is connected to the second bus terminal of the motor controller 120. The controller 140 is configured to control the bridge arm of the motor controller in a second preset state, to boost and charge the power battery.

Specifically, the positive electrode of the DC charging and discharging port 130 is connected to the neutral wire by the switch K4, and the negative electrode is connected to the second bus terminal of the motor controller 120 by the switch K3. In the second preset state, that is, when the power battery 110 needs to be boosted and charged, the switches K3 and K4 may be controlled to be opened, and the bridge arm of the motor controller 120 may be controlled, for example, on duration of the first bridge arm 121 may be controlled to increase, and a higher amount of electricity may be obtained at the first inductor 151 and flow into the power battery 110 through the neutral wire, to boost and charge the power battery, so as to achieve the objective of fast charging of the power battery 110.

According to an embodiment of the present disclosure, the controller 140 is configured to collect a battery equalization parameter and a temperature requirement parameter of the power battery 110; and obtain a target equalizing current based on the battery equalization parameter, obtain a target self-heating current based on the temperature requirement parameter, and adjust, based on the target equalizing current, the target self-heating current, and an actual phase current of the motor, a first control signal for controlling the motor controller 120, to self-heat and equalize the first battery pack E1 and the second battery pack E2.

According to an embodiment of the present disclosure, the controller 140 is configured to perform integral calculation on the battery equalization parameter to obtain the target equalizing current, where the battery equalization parameter includes: one of a discharge capacity difference, a voltage difference, and an instantaneous power difference, where the discharge capacity difference, the voltage difference, and the instantaneous power difference denote a discharge capacity difference, a voltage difference, and an instantaneous power difference between the first battery pack and the second battery pack, respectively.

Specifically, the controller 140 collects the battery equalization parameter of the power battery 110 and the temperature requirement parameter of the power battery 110. The battery equalization parameter of the power battery 110 may include a discharge capacity difference $\Delta Q$. Integral calculation is performed on the discharge capacity difference $\Delta Q$ to obtain a target equalizing current. After the target equalizing current is obtained, a target self-heating current may be obtained based on the temperature requirement parameter when the power battery 110 is self-heating. For example, a table look-up method may be used. In a table, the temperature requirement parameter and the target self-heating current are in a one-to-one correspondence, and the target self-heating current may be determined based on the temperature requirement parameter. A larger temperature requirement parameter indicates a larger target self-heating current. A smaller temperature requirement parameter indicates a smaller target self-heating current. After the target equalizing current and the target self-heating current are obtained, the first control signal for controlling the motor controller 120 may be adjusted based on the target equalizing current, the target self-heating current, and an actual phase current of the motor. The first control signal may adjust the duty cycle of the first bridge arm 120, so that the first battery pack E1 and the second battery pack E2 can be self-heated and equalized, and functions of self-heating and active equalization between the first battery pack E1 and the second battery pack E2 can be implemented.

An equalizing current parameter of the power battery 110 may further include a voltage difference $\Delta U$. A target equalizing current is obtained by integrating the voltage difference $\Delta U$ between the first battery pack E1 and the second battery pack E2, and a target self-heating current is obtained based on the temperature requirement parameter when the power battery 110 is self-heating. For example, if there is a larger current temperature requirement parameter, there is a higher target self-heating current, or if there is a smaller current temperature requirement parameter, there is a lower target self-heating current. After the target equalizing current and the target self-heating current are obtained, the first control signal for controlling the motor controller 120 may be adjusted based on the target equalizing current, the target self-heating current, and an actual phase current of the motor. The first control signal may adjust the duty cycle of the first bridge arm 120, so that the first battery pack E1 and the second battery pack E2 can be self-heated and equalized, and functions of self-heating and active equalization between the first battery pack E1 and the second battery pack E2 can be implemented.

The equalizing current parameter of the power battery 110 may further include an instantaneous power difference $\Delta P$. A target equalizing current is obtained by integrating the instantaneous power difference $\Delta P$ between the first battery pack E1 and the second battery pack E2, and a target self-heating current is obtained based on the temperature requirement parameter when the power battery 110 is self-heating. For example, if there is a larger current temperature requirement parameter, there is a higher target self-heating current, or if there is a smaller current temperature requirement parameter, there is a lower target self-heating current. After the target equalizing current and the target self-heating current are obtained, the first control signal for controlling the motor controller 120 may be adjusted based on the target equalizing current, the target self-heating current, and an actual phase current of the motor. The first control signal may adjust the duty cycle of the first bridge arm 120, so that the first battery pack E1 and the second battery pack E2 can be self-heated and equalized, and functions of self-heating and active equalization between the first battery pack E1 and the second battery pack E2 can be implemented.

According to an embodiment of the present disclosure, the battery equalization parameter is the discharge capacity difference; and the controller 140 is configured to collect each phase current of the motor; calculate a neutral wire current of the motor based on each phase current of the motor; and integrate the neutral wire current to obtain the discharge capacity difference.

Specifically, the motor is an M-phase N-wire motor. For example, in a six-phase seven-wire motor, a current of each phase of the motor is collected, to obtain six phase currents (ia, ib, ic, iu, iv, and iw) are obtained. Taking a direction in which the current flows into the motor as a positive direction, ia + ib + ic + iu + iv + iw + in = 0 is satisfied, where in is a neutral wire current of the motor. Each phase current of the motor is collected by the controller 140. For example, magnitudes of phase currents ia, ib, ic, iu, iv, and iw may be collected by a current sensor, and after each phase current of the motor is obtained, a neutral wire current in of the motor may be calculated through in = - ia - ib - ic - iu - iv - iw. After the neutral wire current in of the motor is obtained, the neutral wire current in may be integrated, to obtain the discharge capacity difference $\Delta Q$ between the first battery pack E1 and the second battery pack E2. A phase shift control technology (troughs and peaks of PWM count values of each phase of bridge arm are sampled, and phase shift control can implement multiple level sampling of a carrier cycle) is used for motor control. An MCU collects each phase current of the motor through a zero-crossing point or a cycle point of the carrier cycle of each phase of bridge arm, which is used to calculate the neutral wire current of the motor, improve sampling times in a unit cycle of the neutral wire current of the motor, and calculate a discharge difference between the two battery packs more accurately. Through the phase shift control technology, a current ripple of the neutral wire of the motor can be reduced, and certain electro magnetic compatibility (EMC) interference and noise vibration harshness (NVH) noise can be reduced. An update cycle of the discharge capacity difference $\Delta Q$ is based on a carrier cycle of each bridge arm. In addition, each phase current of the motor and the neutral wire current of the motor are sampled, and the integration of the neutral wire current of the motor during a self-heating cycle is calculated and is updated once.

According to an embodiment of the present disclosure, the battery equalization parameter is the discharge capacity difference; and the controller 140 is configured to collect a bus positive current and a bus negative current of the power battery 110; perform ampere-hour integration on the bus positive current of the power battery 110, to obtain a discharge capacity of the first battery pack E1, and perform ampere-time integration on the bus negative current of the power battery 110, to obtain a discharge capacity of the second battery pack E2; and obtain the discharge capacity difference based on the discharge capacity of the first battery pack E1 and the discharge capacity of the second battery pack E2.

Specifically, during self-heating of the power battery 110, the controller 140 collects the bus positive current and the bus negative current of the power battery 110, performs ampere-hour integration on the bus positive current and the bus negative current of the power battery 110, that is, performs ampere-hour integration on the bus negative current of the power battery 110 to calculate a cumulative discharge capacity Q2 and performs ampere-hour integration on the bus positive current of the power battery 110 to calculates a cumulative discharge capacity Q1, and may obtain the discharge capacity difference $\Delta Q$ based on the discharge capacity Q1 of the first battery pack E1 and the discharge capacity Q2 of the second battery pack E2 after obtaining the discharge capacities Q1 and Q2. The bus positive current and the bus negative current of the power battery may be collected by a battery management system (BMS), and current Hall of a bus positive electrode and a bus negative electrode of a power battery pack and a voltage sampling circuit of each battery unit are directly integrated in the BMS without additional devices.

According to an embodiment of the present disclosure, the battery equalization parameter is the discharge capacity difference; and the controller 140 is configured to collect a bus positive current of the motor controller 120 and a bus negative current of the motor controller 120; perform ampere-hour integration on the bus positive current, to obtain the discharge capacity of the first battery pack E1, and perform ampere-time integration on the bus negative current, to obtain the discharge capacity of the second battery pack E2; and obtain the discharge capacity difference based on the discharge capacity of the first battery pack E1 and the discharge capacity of the second battery pack E2.

Specifically, during self-heating of the power battery 110, the controller 140 collects the bus positive current and the bus negative current of the motor controller 120, performs ampere-hour integration on the bus positive current and the bus negative current of the motor controller 120, that is, performs ampere-hour integration on the bus positive current of the motor controller 120 to calculate a cumulative discharge capacity Q1 and performs ampere-hour integration on the bus negative current of the motor controller 120 to calculates a cumulative discharge capacity Q2, and may obtain the discharge capacity difference $\Delta Q$ based on the discharge capacity Q1 of the first battery pack E1 and the discharge capacity Q2 of the second battery pack E2 after obtaining the discharge capacities Q1 and Q2. The bus positive current of the of the motor controller 120 and the bus negative current of the motor controller 120 may be collected by the MCU, which can avoid a switching time of a power device and interference, to collect the currents more accurately.

According to an embodiment of the present disclosure, an equalizing current parameter is the voltage difference; and the controller 140 is configured to collect a bus voltage of the motor controller 120 and a voltage of the second battery pack E2; calculate a voltage of the first battery pack E1 based on the bus voltage and the voltage of the second battery pack E2; and determine the voltage difference based on the voltage of the first battery pack E1 and the voltage of the second battery pack E2.

Specifically, the controller 140 may collect the bus voltage of the motor controller 120 and a neutral wire voltage to earth of the motor (the voltage of the second battery pack E2), where the bus voltage of the motor controller 120 is a sum of the voltage of the first battery pack E1 and the voltage of the second battery pack E2. After the bus voltage of the motor controller 120 and the voltage of the second battery pack E2 are obtained, the voltage of the first battery pack E1 may be calculated by subtracting the voltage of the second battery pack E2 from the bus voltage of the motor controller 120. After the voltage of the first battery pack E1 and the voltage of the second battery pack E2 are obtained, the voltage difference $\Delta U$ may be determined based on the voltage of the first battery pack E1 and the voltage of the second battery pack E2.

According to an embodiment of the present disclosure, the equalizing current parameter is the instantaneous power difference; and the controller 140 is configured to collect the bus positive current and the bus negative current of the power battery 110, the voltage of the first battery pack E1, and the voltage of the second battery pack E2; determine instantaneous power of the first battery pack E1 based on the bus positive current and the voltage of the first battery pack E1, and determine instantaneous power of the second battery pack E2 based on the bus negative current and the voltage of the second battery pack E2; and determine the instantaneous power difference based on the instantaneous power of the first battery pack E1 and the instantaneous power of the second battery pack E2.

Specifically, the controller 140 collects the bus positive current of the power battery 110, the bus negative current of the power battery, the voltage of the first battery pack E1, and the voltage of the second battery pack E2, may determine instantaneous power p1 of the first battery pack E1 based on a product of the voltage of the first battery pack E1 and the bus positive current of the power battery 110, may determine instantaneous power p2 of the second battery pack E2 based on a product of the voltage of the second battery pack E2 and the bus negative current of the power battery, and may determine the instantaneous power difference Δp based on the instantaneous power p1 of the first battery pack E1 and the instantaneous power p2 of the second battery pack E2 after calculating the instantaneous power of each battery pack.

According to an embodiment of the present disclosure, the controller 140 is configured to obtain required heating power based on the temperature requirement parameter; determine an amplitude and a frequency of a self-heating current of the neutral wire based on the required heating power; and determine the target heating current based on the amplitude and the frequency.

Further, according to an embodiment of the present disclosure, the controller 140 is further configured to obtain the target heating equalizing current by the following formula:

$$In^* = indc + ipk \cdot \sin(2 \cdot \pi \cdot f \cdot t) \tag{1},$$

where $In^*$ denotes the target heating equalizing current, $indc$ denotes the target equalizing current, $ipk$ denotes an amplitude of the target self-heating current, $f$ denotes a frequency of the target self-heating current, and $t$ denotes a current time.

Specifically, after a self-heating requirement signal of the power battery 110 is obtained, whether a self-heating function needs to be enabled may be determined based on a current temperature of the power battery 110. When the current temperature of the power battery 110 is low, to ensure the power supply capacity of the power battery 110, a self-heating program of the power battery may be entered, and required heating power may be determined based on a heating requirement for the power battery 110, that is, based on the temperature requirement parameter when the power battery 110 is self-heating. For example, if the current temperature of the power battery 110 is lower, the required heating power is higher. For example, if the current temperature of the power battery 110 is higher, the required heating power is lower. After the required heating power is obtained, the amplitude $ipk$ and the frequency $f$ of the self-heating current of the neutral wire may be determined based on an amplitude of the required heating power, and the target heating current may be determined based on the amplitude $ipk$ and the frequency $f$ after the amplitude $ipk$ and the frequency $f$ of the self-heating current of the neutral wire are obtained. The target heating equalizing current $In^*$ may be determined based on the target equalizing current $indc$, the amplitude $ipk$ and the frequency $f$ of the target self-heating current, and the current time through the above formula (1).

It should be noted that, the temperature requirement parameter of the power battery 110, the amplitude $ipk$ of the target self-heating current, and the required heating power corresponding to the frequency $f$ of the target self-heating current may be calibrated on a bench first, and may generally be obtained by a table look-up method or a linear fitting method.

According to an embodiment of the present disclosure, the controller 140 is further configured to obtain an actual phase current of the motor; obtain a common mode voltage based on the target heating equalizing current and the actual phase current; and adjust the first control signal for the motor controller based on the common mode voltage.

Specifically, after a power battery equalization instruction is received, each actual phase current of the motor is obtained, and a neutral wire current value of the motor is calculated through each phase current value of the motor. A discharge capacity difference ΔQ between the first battery pack E1 and the second battery pack E2 is calculated by calculating the neutral wire current value, and a given target equalizing current indc is obtained by integrating the tolerance ΔQ. After the target equalizing current indc is obtained, for example, the target heating equalizing current in* is obtained by the above formula (1), and a common mode voltage Un controlled by a bridge arm is obtained by PI or PR closed-loop control based on the neutral wire target heating equalizing current in* and the actual neutral wire current in (the actual neutral wire current in is calculated by a sum of the actual neutral wire current in and each actual phase current of the motor being zero). The first control signal for the motor controller is adjusted based on the common mode voltage Un, and the bus positive current and the bus negative current are adjusted by adjusting and controlling the duty cycle of each phase of bridge arm, so as to implement self-heating and equalization of the first battery pack E1 and the second battery pack E2 when the vehicle is in a charging state.

According to an embodiment of the present disclosure, the controller 140 is configured to control, when it is detected that the absolute value of the difference between the capacitance of the first battery pack E1 and the capacitance of the second battery pack E2 is not lower than the preset threshold in a third preset state, the bridge arm of the motor controller 120 to equalize the first battery pack E1 and the second battery pack E2.

Specifically, when it is detected that the difference between the capacitance of the first battery pack E1 and the capacitance of the second battery pack E2 is not lower than the preset threshold, it means that the current absolute value of the difference between the capacitance of the first battery pack E1 and the capacitance of the second battery pack E2 is large, and the power battery 110 is not in an equalized state. That is, in the third preset state (the state in which the power battery 110 only performs electric quantity equalization), the bridge arm of the motor controller 120 may be controlled to equalize the first battery pack E1 and the second battery pack E2, so that the absolute value of the difference between the capacitance of the first battery pack E1 and the capacitance of the second battery pack E2 is smaller. For example, when the first battery pack E1 has a larger capacitance while the second battery pack E2 has a smaller capacitance, a discharging time of the first battery pack E1 may be longer and a charging time of the second battery pack E2 may be longer by controlling the bridge arm of the motor controller 120, to implement the equalization of capacitance between the first battery pack E1 and the second battery pack E2.

To sum up, in the battery dynamic equalization apparatus according to the embodiment of the present disclosure, the power battery includes the first battery pack and the second battery pack that are connected in series, and the first node is provided between the first battery pack and the second battery pack. The first end of the motor controller is connected to the positive electrode of the first battery pack, and the second end of the motor controller is connected to the negative electrode of the second battery pack. The positive electrode of the DC charging and discharging port is connected to the first bus terminal of the motor controller, and the negative electrode of the DC charging and discharging port is connected to the second bus terminal of the motor controller. The controller is connected to the motor controller. The controller is configured to in the first preset state, the power battery is charged through the DC charging and discharging port, and the bridge arm of the motor controller is controlled to alternately charge and discharge the first battery pack and the second battery pack to implement self-heating of the first battery pack and the second battery pack, and cause the absolute value of the difference between the capacitance of the first battery pack and the capacitance of the second battery pack to be lower than the preset threshold. Therefore, the equalization apparatus can implement dynamic equalization of electric quantity between the first battery pack and the second battery pack during self-heating when the power battery is being charged, thereby improving performance of batteries and prolonging battery life.

Corresponding to the foregoing embodiment, the present disclosure further provides a control method for a battery dynamic equalization apparatus.

As shown in FIG. 3, the control method for a battery dynamic equalization apparatus according to an embodiment of the present disclosure includes the following steps:

S1: In a first preset state, a power battery is charged through a DC charging and discharging port, and a bridge arm of a motor controller is controlled to alternately charge and discharge a first battery pack and a second battery pack to implement self-heating of the first battery pack and the second battery pack, and cause an absolute value of a difference between a capacitance of the first battery pack and a capacitance of the second battery pack to be lower than a preset threshold.

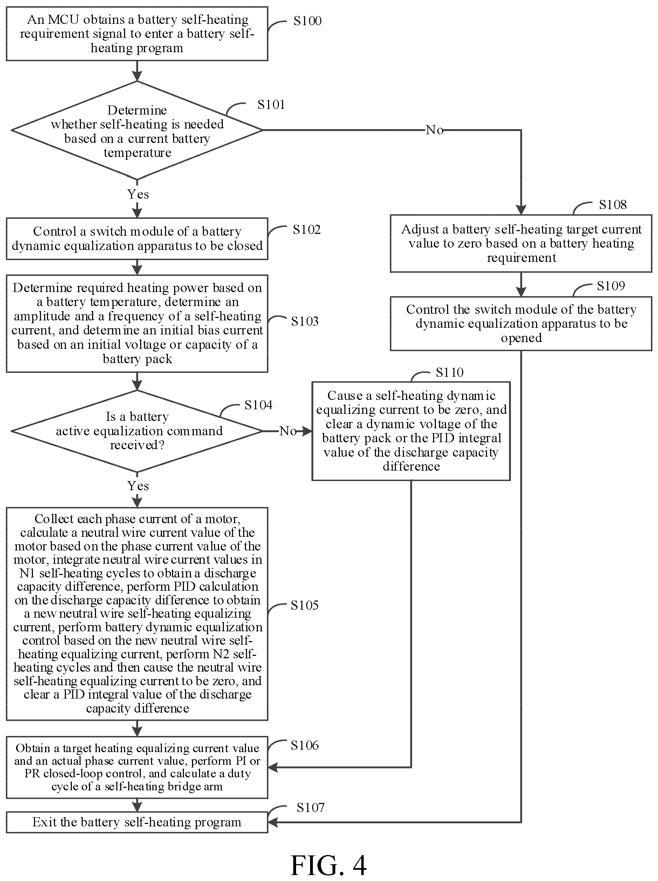

The control method according to the present disclosure is described with reference to FIG. 4 below.

As a specific example, the control method for a battery dynamic equalization apparatus according to the present disclosure may include the following steps:

S100: An MCU obtains a battery self-heating requirement signal to enter a battery self-heating program.
S101: Determine whether self-heating is needed based on a current battery temperature. If yes, execute step S102, or if not, execute step S108.
S102: Control a switch module of the battery dynamic equalization apparatus to be closed.
S103: Determine required heating power based on a battery temperature, determine an amplitude and a frequency of a self-heating current, and determine an initial bias current based on an initial voltage or capacity of a battery pack.
S104: Determine whether a battery active equalization command is received. If yes, execute step S105, or if not, execute step S110.
S105: Collect each phase current of a motor, calculate a neutral wire current value of the motor based on the phase current value of the motor, integrate neutral wire current values in N1 self-heating cycles to obtain a discharge capacity difference, perform PID calculation on the discharge capacity difference to obtain a new neutral wire self-heating equalizing current, perform battery dynamic equalization control based on the new neutral wire self-heating equalizing current, perform N2 self-heating cycles and then cause the neutral wire self-heating equalizing current to be zero, and clear a PID integral value of the discharge capacity difference. No PID calculation on the discharge capacity difference is performed during the N2 self-heating cycles, where N1 and N2 are positive integers, and N2 is much greater than N1 (for example, N2 = 100N1).
S106: Obtain a target heating equalizing current value and an actual phase current value, perform PI or PR closed-loop control, and calculate a duty cycle of a self-heating bridge arm.
S107: Exit the battery self-heating program.
S108: Adjust a battery self-heating target current value to zero based on a battery heating requirement.
S109: Control the switch module of the battery dynamic equalization apparatus to be opened, and perform step S107.

**EP 4 624 239 A1**

S110: Cause a self-heating dynamic equalizing current to be zero, clear a dynamic voltage of the battery pack or the PID integral value of the discharge capacity difference, and perform step S106.

It should be noted that, for details not disclosed in the control method for a battery dynamic equalization apparatus according to the embodiment of the present disclosure, refer to the details disclosed in the battery dynamic equalization apparatus according to the embodiment of the present disclosure. Details are not described herein.

In the control method for a battery dynamic equalization apparatus according to the embodiment of the present disclosure, the apparatus includes: a power battery, a motor controller, a DC charging and discharging port, and a controller, where the power battery includes a first battery pack and a second battery pack that are connected in series, and a first node is provided between the first battery pack and the second battery pack. A first end of the motor controller is connected to a positive electrode of the first battery pack, and a second end of the motor controller is connected to a negative electrode of the second battery pack. A positive electrode of the DC charging and discharging port is connected to a first bus terminal of the motor controller, and a negative electrode of the DC charging and discharging port is connected to a second bus terminal of the motor controller. The controller is connected to the motor controller. The method is applied to the controller and includes: in the first preset state, the power battery is charged through the DC charging and discharging port, and the bridge arm of the motor controller is controlled to alternately charge and discharge the first battery pack and the second battery pack to implement self-heating of the first battery pack and the second battery pack, and cause the absolute value of the difference between the capacitance of the first battery pack and the capacitance of the second battery pack to be lower than the preset threshold. Therefore, the method can implement dynamic equalization of electric quantity between the first battery pack and the second battery pack during self-heating when the power battery is being charged, thereby improving performance of batteries and prolonging battery life.

Corresponding to the foregoing embodiments, the present disclosure further provides a vehicle.

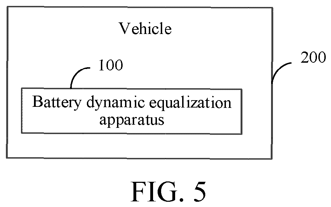

As shown in FIG. 5, a vehicle 200 according to an embodiment of the present disclosure may include the above battery dynamic equalization apparatus 100.

In the vehicle according to the embodiment of the present disclosure, through the above battery dynamic equalization apparatus included, dynamic equalization of electric quantity between a first battery pack and a second battery pack during self-heating when a power battery is being charged can be implemented, thereby improving performance of batteries and prolonging battery life.

It should be noted that, The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of computer-readable media include: an electrical connection piece (electronic apparatus) having one or more wires, a portable computer disk cartridge (magnetic apparatus), a random access memory (RAM), a read-only memory (ROM), an erasable programmable read-only memory (EPROM or flash memory), an optical fiber apparatus, and a portable compact disc read-only memory (CD-ROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if they are implemented by hardware, as in another implementation, they can be implemented by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, descriptions with reference to the terms such as "an embodiment", "some embodiments", "example", "specific example" or "some examples" mean that specific features, structures, materials, or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; may be a mechanical connection or an electrical connection; and may be a direct connection, an indirect connection through an intermediary, or internal communication between two elements or mutual action relationship between two elements, unless otherwise specified explicitly. A person of ordinary skill in the art can understand specific meanings of the terms in the present disclosure based on specific situations.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1.  A battery dynamic equalization apparatus, comprising:

    a power battery, the power battery comprising a first battery pack and a second battery pack that are connected in series, and a first node being provided between the first battery pack and the second battery pack;
    a motor controller, a first end of the motor controller being connected to a positive electrode of the first battery pack, and a second end of the motor controller being connected to a negative electrode of the second battery pack;
    a DC charging and discharging port, a positive electrode of the DC charging and discharging port being connected to a first bus terminal of the motor controller, and a negative electrode of the DC charging and discharging port being connected to a second bus terminal of the motor controller; and
    a controller, the controller being connected to the motor controller, and the controller being configured to charge, in a first preset state, the power battery through the DC charging and discharging port, and control a bridge arm of the motor controller to alternately charge and discharge the first battery pack and the second battery pack to implement self-heating of the first battery pack and the second battery pack, and cause an absolute value of a difference between a capacitance of the first battery pack and a capacitance of the second battery pack to be lower than a preset threshold.

2.  The battery dynamic equalization apparatus according to claim 1, further comprising a motor, the motor controller comprise at least two phases of first bridge arms, a first end of each phase of first bridge arm being connected to the positive electrode of the first battery pack, and a second end of each phase of first bridge arm being connected to the negative electrode of the second battery pack; the motor compries at least two phases of first inductors, a first end of each phase of first inductor being connected to a corresponding first bridge arm, and a second end of each phase of first inductor being connected to the first node; and a neutral wire being led out from the motor, and the neutral wire being connected to the first node.

3.  The battery dynamic equalization apparatus according to claim 2, further comprising:

    a DC charging and discharging port, a positive electrode of the DC charging and discharging port being connected to the neutral wire, and a negative electrode of the DC charging and discharging port being connected to the second bus terminal of the motor controller; and
    the controller being configured to control the bridge arm of the motor controller in a second preset state, to boost and charge the power battery.

4.  The battery dynamic equalization apparatus according to claim 3, wherein the controller is configured to:

    collect a battery equalization parameter and a temperature requirement parameter of the power battery; and
    obtain a target equalizing current based on the battery equalization parameter, obtain a target self-heating current based on the temperature requirement parameter, and adjust, based on the target equalizing current, the target self-heating current, and an actual phase current of the motor, a first control signal for controlling the motor controller, to self-heat and equalize the first battery pack and the second battery pack.

5. The battery dynamic equalization apparatus according to claim 4, wherein the controller is configured to: perform integral calculation on the battery equalization parameter to obtain the target equalizing current, wherein the battery equalization parameter comprises: one of a discharge capacity difference, a voltage difference, and an instantaneous power difference, the discharge capacity difference, the voltage difference, and the instantaneous power difference denoting a discharge capacity difference, a voltage difference, and an instantaneous power difference between the first battery pack and the second battery pack, respectively.

6. The battery dynamic equalization apparatus according to claim 5, wherein the battery equalization parameter is the discharge capacity difference; and
the controller is configured to collect each phase current of the motor; calculate a neutral wire current of the motor based on each phase current of the motor; and integrate the neutral wire current to obtain the discharge capacity difference.

7. The battery dynamic equalization apparatus according to claim 5 or 6, wherein the battery equalization parameter is the discharge capacity difference; and
the controller is configured to collect a bus positive current and a bus negative current of the power battery; perform ampere-hour integration on a bus positive current of the power battery, to obtain a discharge capacity of the first battery pack, and perform ampere-time integration on a bus negative current of the power battery, to obtain a discharge capacity of the second battery pack; and obtain the discharge capacity difference based on the discharge capacity of the first battery pack and the discharge capacity of the second battery pack.

8. The battery dynamic equalization apparatus according to any one of claims 5 to 7, wherein the battery equalization parameter is the discharge capacity difference; and
the controller is configured to collect a bus positive current of the motor controller and a bus negative current of the motor controller; perform ampere-hour integration on the bus positive current, to obtain the discharge capacity of the first battery pack, and perform ampere-time integration on the bus negative current, to obtain the discharge capacity of the second battery pack; and obtain the discharge capacity difference based on the discharge capacity of the first battery pack and the discharge capacity of the second battery pack.

9. The battery dynamic equalization apparatus according to any one of claims 5 to 8, wherein an equalizing current parameter is the voltage difference; and
the controller is configured to collect a bus voltage of the motor controller and a voltage of the second battery pack; calculate a voltage of the first battery pack based on the bus voltage and the voltage of the second battery pack; and determine the voltage difference based on the voltage of the first battery pack and the voltage of the second battery pack.

10. The battery dynamic equalization apparatus according to any one of claims 5 to 9, wherein the equalizing current parameter is the instantaneous power difference; and
the controller is configured to collect the bus positive current and the bus negative current of the power battery, the voltage of the first battery pack, and the voltage of the second battery pack; determine instantaneous power of the first battery pack based on the bus positive current and the voltage of the first battery pack, and determine instantaneous power of the second battery pack based on the bus negative current and the voltage of the second battery pack; and determine the instantaneous power difference based on the instantaneous power of the first battery pack and the instantaneous power of the second battery pack.

11. The battery dynamic equalization apparatus according to any one of claims 4 to 10, wherein the controller is configured to obtain required heating power based on the temperature requirement parameter; determine an amplitude and a frequency of a self-heating current of the neutral wire based on the required heating power; and determine the target self-heating current based on the amplitude and the frequency.

12. The battery dynamic equalization apparatus according to claim 11, wherein the controller is further configured to obtain the target heating equalizing current by the following formula:

$$In^* = indc + ipk \cdot \sin(2 \cdot \pi \cdot f \cdot t)$$

wherein $In^*$ denotes the target heating equalizing current, $indc$ denotes the target equalizing current, $ipk$ denotes an amplitude of the target self-heating current, $f$ denotes a frequency of the target self-heating current, and $t$ denotes a time.

13. The battery dynamic equalization apparatus according to claim 12, wherein the controller is further configured to

obtain an actual phase current of the motor; obtain a common mode voltage based on the target heating equalizing current and the actual phase current; and
adjust the first control signal for the motor controller based on the common mode voltage.

14. The battery dynamic equalization apparatus according to any one of claims 1 to 13, wherein the controller is configured to control, when it is detected that the absolute value of the difference between the capacitance of the first battery pack and the capacitance of the second battery pack is not lower than the preset threshold in a third preset state, the bridge arm of the motor controller to equalize the first battery pack and the second battery pack.

15. A control method for a battery dynamic equalization apparatus, the battery dynamic equalization apparatus comprising: a power battery, a motor controller, a DC charging and discharging port, and a controller, wherein the power battery comprises a first battery pack and a second battery pack that are connected in series, a first node is provided between the first battery pack and the second battery pack, a first end of the motor controller is connected to a positive electrode of the first battery pack, a second end of the motor controller is connected to a negative electrode of the second battery pack, a positive electrode of the DC charging and discharging port is connected to a first bus terminal of the motor controller, a negative electrode of the DC charging and discharging port is connected to a second bus terminal of the motor controller, the controller is connected to the motor controller, and the method is applied to the controller and comprises:
charging, in a first preset state, the power battery through the DC charging and discharging port, and controlling a bridge arm of the motor controller to alternately charge and discharge the first battery pack and the second battery pack to implement self-heating of the first battery pack and the second battery pack, and cause an absolute value of a difference between a capacitance of the first battery pack and a capacitance of the second battery pack to be lower than a preset threshold.

16. A vehicle, comprising the battery dynamic equalization apparatus according to any one of claims 1 to 14.

FIG. 1

FIG. 2

Charge, in a first preset state, a power battery through a DC charging and discharging port, and control a bridge arm of a motor controller to alternately charge and discharge a first battery pack and a second battery pack to implement self-heating of the first battery pack and the second battery pack, and cause an absolute value of a difference between a capacitance of the first battery pack and a capacitance of the second battery pack to be lower than a preset threshold

~ S1

FIG. 3

EP 4 624 239 A1

An MCU obtains a battery self-heating requirement signal to enter a battery self-heating program — S100

Determine whether self-heating is needed based on a current battery temperature — S101

— No →

Yes ↓

Control a switch module of a battery dynamic equalization apparatus to be closed — S102

Determine required heating power based on a battery temperature, determine an amplitude and a frequency of a self-heating current, and determine an initial bias current based on an initial voltage or capacity of a battery pack — S103

Is a battery active equalization command received? — S104

— No →

Yes ↓

Collect each phase current of a motor, calculate a neutral wire current value of the motor based on the phase current value of the motor, integrate neutral wire current values in N1 self-heating cycles to obtain a discharge capacity difference, perform PID calculation on the discharge capacity difference to obtain a new neutral wire self-heating equalizing current, perform battery dynamic equalization control based on the new neutral wire self-heating equalizing current, perform N2 self-heating cycles and then cause the neutral wire self-heating equalizing current to be zero, and clear a PID integral value of the discharge capacity difference — S105

Obtain a target heating equalizing current value and an actual phase current value, perform PI or PR closed-loop control, and calculate a duty cycle of a self-heating bridge arm — S106

Exit the battery self-heating program — S107

Adjust a battery self-heating target current value to zero based on a battery heating requirement — S108

Control the switch module of the battery dynamic equalization apparatus to be opened — S109

Cause a self-heating dynamic equalizing current to be zero, and clear a dynamic voltage of the battery pack or the PID integral value of the discharge capacity difference — S110

FIG. 4

16

Vehicle

100

Battery dynamic equalization apparatus

200

FIG. 5

## INTERNATIONAL SEARCH REPORT

| | International application No. |
|---|---|
| | **PCT/CN2023/129001** |

**A. CLASSIFICATION OF SUBJECT MATTER**

B60L58/22(2019.01)i; B60L53/24(2019.01)i; H01M10/615(2014.01)i; H01M10/44(2006.01)i

According to International Patent Classification (IPC) or to both national classification and IPC

**B. FIELDS SEARCHED**

Minimum documentation searched (classification system followed by classification symbols)

IPC: B60L,H01M,H02J

Documentation searched other than minimum documentation to the extent that such documents are included in the fields searched

Electronic data base consulted during the international search (name of data base and, where practicable, search terms used)

CNTXT, ENTXT, WPABSC, CNKI: 充电, 放电, 加热, 电池, 自加热, 电压, 电量, 均衡, 直流, charge, discharge, heat, battery, self heat, voltage, quality, equalization, DC

**C. DOCUMENTS CONSIDERED TO BE RELEVANT**

| Category* | Citation of document, with indication, where appropriate, of the relevant passages | Relevant to claim No. |
|---|---|---|
| A | CN 113650529 A (BEIJING NEW ENERGY AUTOMOBILE CO., LTD. LANGU POWER SYSTEM BRANCH et al.) 16 November 2021 (2021-11-16) description, paragraphs 87-92, and figures 2-3 | 1-16 |
| A | CN 114335812 A (GM GLOBAL TECHNOLOGY OPERATIONS LLC) 12 April 2022 (2022-04-12) entire document | 1-16 |
| A | CN 114074561 A (BYD CO., LTD.) 22 February 2022 (2022-02-22) entire document | 1-16 |
| A | CN 114590173 A (BYD CO., LTD.) 07 June 2022 (2022-06-07) entire document | 1-16 |
| A | CN 112550078 A (BYD CO., LTD.) 26 March 2021 (2021-03-26) entire document | 1-16 |
| A | US 2015231985 A1 (FORD GLOBAL TECHNOLOGIES, LLC.) 20 August 2015 (2015-08-20) entire document | 1-16 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 January 2024** | **22 January 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/129001** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 113752908 A (BYD CO., LTD.) 07 December 2021 (2021-12-07) entire document | 1-16 |

Form PCT/ISA/210 (second sheet) (July 2022)

## INTERNATIONAL SEARCH REPORT
### Information on patent family members

International application No.

**PCT/CN2023/129001**

| Patent document cited in search report | | | Publication date (day/month/year) | Patent family member(s) | | | Publication date (day/month/year) |
|---|---|---|---|---|---|---|---|
| CN | 113650529 | A | 16 November 2021 | None | | | |
| CN | 114335812 | A | 12 April 2022 | DE | 102021110667 | A1 | 31 March 2022 |
| | | | | US | 2022102769 | A1 | 31 March 2022 |
| CN | 114074561 | A | 22 February 2022 | None | | | |
| CN | 114590173 | A | 07 June 2022 | None | | | |
| CN | 112550078 | A | 26 March 2021 | None | | | |
| US | 2015231985 | A1 | 20 August 2015 | DE | 102015202702 | A1 | 20 August 2015 |
| | | | | DE | 102015202702 | B4 | 22 June 2023 |
| | | | | US | 9381825 | B2 | 05 July 2016 |
| CN | 113752908 | A | 07 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211527259